# EUROPEAN PATENT APPLICATION

(11) **EP 1 067 455 A1**
(43) Date of publication of application: **10.01.2001**
(21) Application number: 99401746.5
(22) Date of filing: 09.07.1999
(51) Int. Cl.: G06F 9/445

(54) **Running and testing applications**

(71) Applicant: CANAL+ Société Anonyme, 75711 Paris Cedex 15 (FR)
(72) Inventor: Beuque, Jean-Bernard Gerard Maurice, 92270 Bois-Colombes (FR); Liao, Hongtao, 78180 Montigny-Btx (FR); Boudokhane, Mahmoud, 75516 Paris Cedex 15 (FR); Vincent, Didier, 75516 Paris Cedex 15 (FR)
(74) Representative: Cozens, Paul Dennis

(57) **Abstract**

A receiver/decoder, for example, for an analogue or a digital television system, is disclosed, the receiver/decoder comprising means for running an application comprising a plurality of files, and means for reading at least one of the files from an external storage means. An associated workstation, and an application development tool for editing applications, are also disclosed. Also disclosed is a method of transferring an application from a workstation to a receiver/decoder, and methods of running an application on a receiver/decoder.

## Description

The invention relates to a receiver/decoder (for example, for an analogue or a digital television system), a workstation and an authoring tool, and to a method of transferring an application to a receiver/decoder and to methods of running an application on a receiver/decoder.

The invention has particular application in the context of developing and testing applications for receiver/decoders, although it may also be used, for example, for demonstrating such applications.

In the case of digital television systems, these transmit television channels to the viewer in digital, rather than analogue, form. The digital channels are encoded into a digital data stream at the transmitter end, and are decoded at the receiver end using a digital decoder, which may be either in a digital set-top box (DSTB) or in an integrated digital television. To allow interactivity, an uplink may be provided, either via the same medium that delivers the television channels, or else via a different medium such as a telephone link. As used herein, the term "digital television system" includes for example any satellite, terrestrial, cable and other system.

Digital decoders typically contain a processor on which programs known as applications may be run. Examples of such applications include program guides, tele-shopping, quizzes, home-banking and tele-voting. Such applications typically display a menu on the television screen from which the user may select a particular option. The data used in the application may be transmitted to the decoder in the same data stream as the television channels. The result of the selection can be directly interpreted by the application running on the DSTB or it can be transmitted via the uplink to allow the appropriate action to be taken.

Applications may be permanently resident in the DSTB or integrated digital television, or they may be downloaded via the digital medium as and when required. To run applications, the DSTB has a run time environment such as a virtual machine (VM) to run, for example, Java applications.

With the rapidly increasing number of services that are being provided to the user, there is a demand for application development tools, which can allow applications to be designed, created, debugged and tested. An example of such an application tool is *Media*highway Application Workshop, supplied by *CANAL*+.

Known application development tools typically allow applications to be developed on a workstation, such as a PC or UNIX workstation. When the application is ready for testing, it is downloaded to a digital decoder such as a DSTB.

According to one aspect of the present invention there is provided a receiver/decoder comprising means for running an application, the application comprising a plurality of files, and means for selectively reading at least one of the files from an external storage means.

The invention can avoid a problem in the prior art which has been identified pursuant to the present invention, that, if any changes are required to be made to the application as a result of the testing on the decoder, the appropriate changes must be made in the application development tool, the application re-compiled as resident, and then the entire resident application and the virtual machine downloaded to the decoder, which process may be time consuming and cumbersome.

By providing a receiver/decoder which can read a file from an external storage means, parts of the application may be read by the receiver/decoder, for example following a modification of some of the parts.

The means for running an application may be a processor, and the means for reading at least one of the files from an external storage means may be an input/outport port and associated drivers. The external storage means may be the hard disk of a computer.

The term "receiver/decoder" used herein may connote a receiver for receiving either encoded or non-encoded signals, for example, television and/or radio signals, which may be broadcast or transmitted by some other means. The term may also connote a decoder for decoding received signals. Embodiments of such receiver/decoders may include a decoder integral with the receiver for decoding the received signals, for example, in a "set-top box", such a decoder functioning in combination with a physically separate receiver, or such a decoder including additional functions, such as a web browser, a video recorder, or a television.

Preferably the receiver/decoder is adapted to read an individual file from the external storage means, so that no more data than necessary is transferred.

The application may contain some files which are not always required to run the application, and thus rather than downloading the whole of the application at one time, the receiver/decoder is preferably adapted to read said at least one file as it is required to run the application.

The receiver/decoder may be adapted to read updated files, so that if files are modified, the receiver/decoder will be updated with the modified files.

The external storage means may be part of a workstation, for example, a workstation which is used to edit applications. In order to compensate for the fact that the receiver/decoder may not have a network stack, the receiver/decoder may be adapted to use as its network stack a simulated network stack on the workstation.

In order to initiate the application, the receiver/decoder is preferably adapted to load a boot file from the external storage means.

According to another aspect of the present invention there is provided a workstation comprising storage means (such as a hard disk or other storage medium) for storing an application, the application comprising a plurality of files, and means (such as an input/output port and associated drivers) for allowing access to at least one of the files by a receiver/decoder. The means for allowing access to said at least one file may be adapted to allow an individual file to be read.

The workstation may further comprise means for editing the application.

According to another aspect of the present invention there is provided an application development tool comprising a workstation for editing an application and a receiver/decoder for running the application, wherein the receiver/decoder has means for selectively reading at least a part of the application from the workstation and the workstation has means for communicating the or each part to the receiver/decoder. The workstation may further comprise storage means, such as a hard disk or other storage medium, for storing the application.

In the above aspect, the application may comprise a plurality of files. The receiver/decoder may be adapted to read an individual file from the storage means. The receiver/decoder may be adapted to read a file as it is required to run the application. The editing tool may be adapted to update a file and the receiver/decoder may be adapted to read said file once updated.

In order to ensure that updated files are used by the receiver/decoder, the receiver/decoder may be adapted to read the most recent version of a file. Additionally or alternatively, the workstation may be adapted to instruct the receiver/decoder to discard a file, for example an old version of a file that has been updated, so that when the receiver/decoder next needs that file, the updated file will be read from the workstation.

According to a method aspect of the present invention there is provided a method of transferring an application from a workstation to a receiver/decoder, the application comprising a plurality of files, comprising transferring an individual file from the workstation to the receiver/decoder. The file may be transferred only when it is required to run the application. The method may further comprise updating a file and transferring the updated file to the receiver/decoder.

According to another method aspect there is provided a method of running an application on a receiver/decoder, the application comprising a plurality of files, comprising transferring files to the receiver/decoder as they are required to run the application.

According to another method aspect there is provided a method of running an application on a receiver/decoder, the application comprising a boot file, comprising:
transferring a boot file to the receiver/decoder; and
executing the boot file in the receiver/decoder.

In some circumstances the boot file may contain the whole application, and thus only the boot file need be transferred. However, the application may contain the boot file and at least one further file. Thus, according to a further method aspect there is provided a method of running an application on a receiver/decoder, the application comprising a boot file and at least one further file, comprising:
transferring a boot file to the receiver/decoder;
executing the boot file in the receiver/decoder; and
transferring the at least one further file when it is required.

The invention also provides a computer readable medium having stored thereon a program for carrying out any of the methods described above, and a computer program product comprising a program for carrying out any of the methods described above.

The invention also provides apparatus substantially as described with reference to and as illustrated in the accompanying drawings, and a method substantially as described with reference to Figure 7 of the accompanying drawings.

Features of one aspect may be applied to other aspects; similarly apparatus features may be applied to the method aspects and *vice versa.*

Preferred features of the present invention will now be described, purely by way of example, with reference to the accompanying drawings, in which:-
Figure 1 shows the architecture of a typical digital television system;
Figure 2 shows the architecture of an interactive system of the digital television system of Figure 1;
Figure 3 is a schematic diagram of the structure of a receiver/decoder of the system of Figure 1;
Figure 4 is a functional block diagram of the layered architecture of the receiver/decoder;
Figure 5 shows an overview of an authoring tool;
Figure 6 shows the main components of the authoring tool of Figure 5;
Figure 7 shows the operation of the authoring tool of Figure 5; and
Figure 8 shows the architecture of input/output layers of the authoring tool of Figure 5.

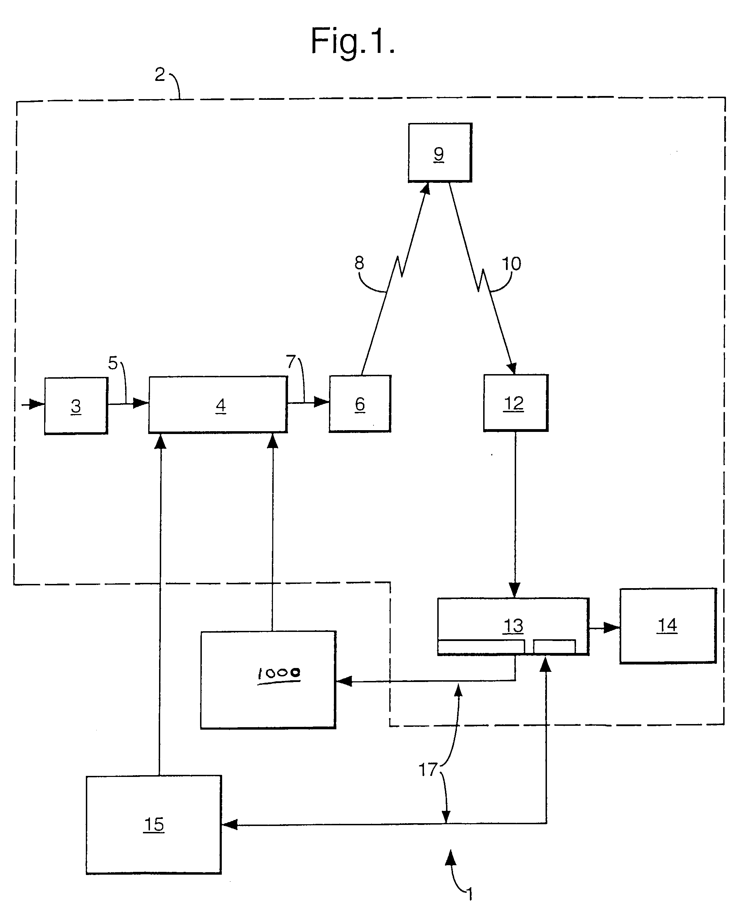

An overview of a digital television system 1 is shown in Figure 1. The invention includes a mostly conventional digital television system 2 that uses the known MPEG-2 compression system to transmit compressed digital signals. In more detail, MPEG-2 compressor 3 in a broadcast centre receives a digital signal stream (typically a stream of video signals). The compressor 3 is connected to a multiplexer and scrambler 4 by linkage 5.

The multiplexer 4 receives a plurality of further input signals, assembles the transport stream and transmits compressed digital signals to a transmitter 6 of the broadcast centre via linkage 7, which can of course take a wide variety of forms including telecommunications links. The transmitter 6 transmits electromagnetic signals via uplink 8 towards a satellite transponder 9, where they are electronically processed and broadcast via notional downlink 10 to earth receiver 12, conventionally in the form of a dish owned or rented by the end user. Other transport channels for transmission of the data are of course possible, such as terrestrial broadcast, cable transmission, combined satellite/cable links, telephone networks etc.

The signals received by receiver 12 are transmitted to an integrated receiver/decoder 13 owned or rented by the end user and connected to the end user's television set 14. The receiver/decoder 13 decodes the compressed MPEG-2 signal into a television signal for the television set 14. Although a separate receiver/decoder is shown in Figure 1, the receiver/decoder may also be part of an integrated digital television. As used herein, the term "receiver/decoder" includes a separate receiver/decoder, such as a set-top box, and a television having a receiver/decoder integrated therewith.

In a multichannel system, the multiplexer 4 handles audio and video information received from a number of parallel sources and interacts with the transmitter 6 to broadcast the information along a corresponding number of channels. In addition to audiovisual information, messages or applications or any other sort of digital data may be introduced in some or all of these channels interlaced with the transmitted digital audio and video information.

A conditional access system 15 is connected to the multiplexer 4 and the receiver/decoder 13, and is located partly in the broadcast centre and partly in the decoder. It enables the end user to access digital television broadcasts from one or more broadcast suppliers. A smartcard, capable of deciphering messages relating to commercial offers (that is, one or several television programmes sold by the broadcast supplier), can be inserted into the receiver/decoder 13. Using the decoder 13 and smartcard, the end user may purchase commercial offers in either a subscription mode or a pay-per-view mode. As used herein, the term "smartcard" includes, but not exclusively so, any chip-based card device, or object of similar function and performance, possessing, for example, microprocessor and/or memory storage. Included in this term are devices having alternative physical forms to a card, for example key-shaped devices such as are often used in TV decoder systems.

As mentioned above, programmes transmitted by the system are scrambled at the multiplexer 4, the conditions and encryption keys applied to a given transmission being determined by the access control system 15. Transmission of scrambled data in this way is well known in the field of pay TV systems. Typically, scrambled data is transmitted together with a control word for descrambling of the data, the control word itself being encrypted by a so-called exploitation key and transmitted in encrypted form.

The scrambled data and encrypted control word are then received by the decoder 13 having access to an equivalent to the exploitation key stored on a smart card inserted in the decoder to decrypt the encrypted control word and thereafter descramble the transmitted data. A paid-up subscriber will receive, for example, in a broadcast monthly ECM (Entitlement Control Message) the exploitation key necessary to decrypt the encrypted control word so as to permit viewing of the transmission.

An interactive system 16, also connected to the multiplexer 4 and the receiver/decoder 13 and again located partly in the broadcast centre and partly in the decoder, enables the end user to interact with various applications via a modemed back channel 17. The modemed back channel may also be used for communications used in the conditional access system 15. An interactive system may be used, for example, to enable the viewer to communicate immediately with the transmission centre to demand authorisation to watch a particular event, to download an application etc.

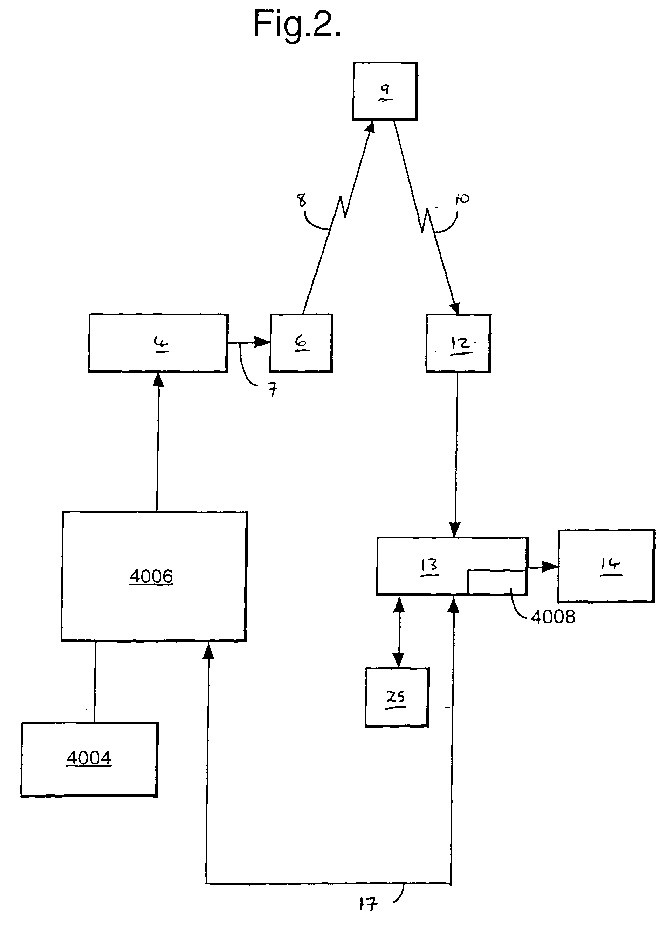

Figure 2 shows the general architecture of the interactive television system 16 of the digital television system 1 of the present invention.

For example, the interacting system 16 allows an end user to buy items from on-screen catalogues, consult local news and weather maps on demand and play games through their television set.

The interactive system 4000 comprises in overview four main elements:-
- an authoring tool 4004 at the broadcast centre or elsewhere for enabling a broadcast supplier to create, develop, debug and test applications;
- an application and data server 4006, at the broadcast centre, connected to the authoring tool 4004 for enabling a broadcast supplier to prepare, authenticate and format applications and data for delivery to the multiplexer and scrambler 4 for insertion into the MPEG-2 transport stream (typically the private section thereof) to be broadcast to the end user;
- a virtual machine including a run time engine (RTE) 4008, which is an executable code installed in the receiver/decoder 13 owned or rented by the end user for enabling an end user to receive, authenticate, decompress, and load applications into the working memory of the decoder 13 for execution. The engine 4008 also runs resident, general-purpose applications. The engine 4008 is independent of the hardware and operating system; and
- a modemed back channel 17 between the receiver/decoder 13 and the application and data server 4006 to enable signals instructing the server 4006 to insert data and applications into the MPEG-2 transport stream at the request of the end user.

The interactive television system operates using "applications" which control the functions of the receiver/decoder and various devices contained therein. Applications are represented in the engine 4008 as "resource files". A "module" is a set of resource files and data. A "memory volume" of the receiver/decoder is a storage space for modules. Modules may be downloaded into the receiver/decoder 13 from the MPEG-2 transport stream.

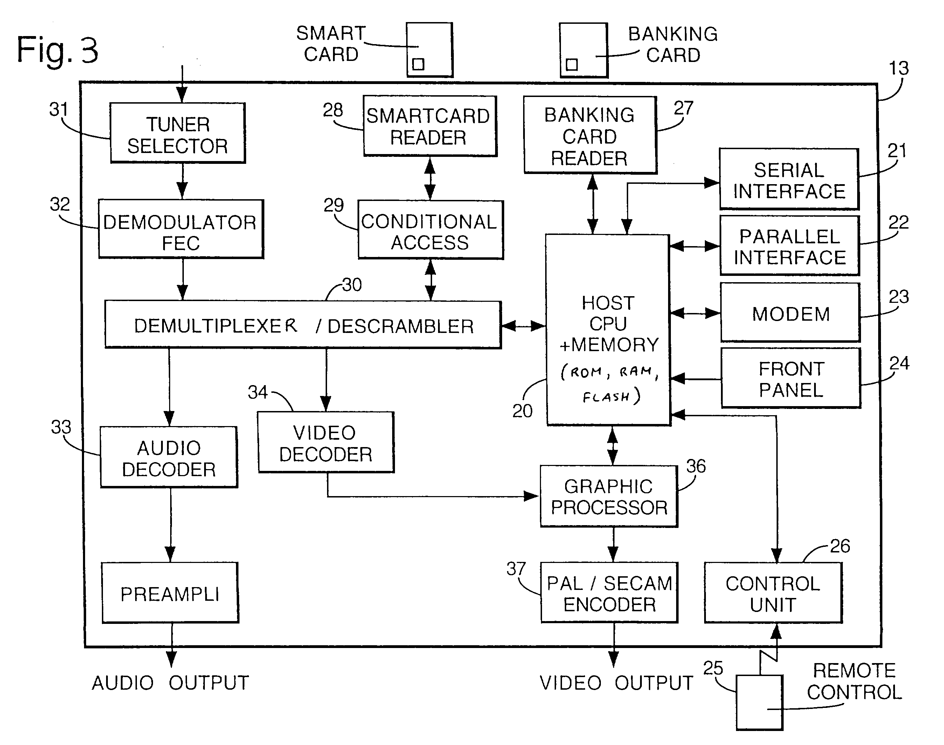

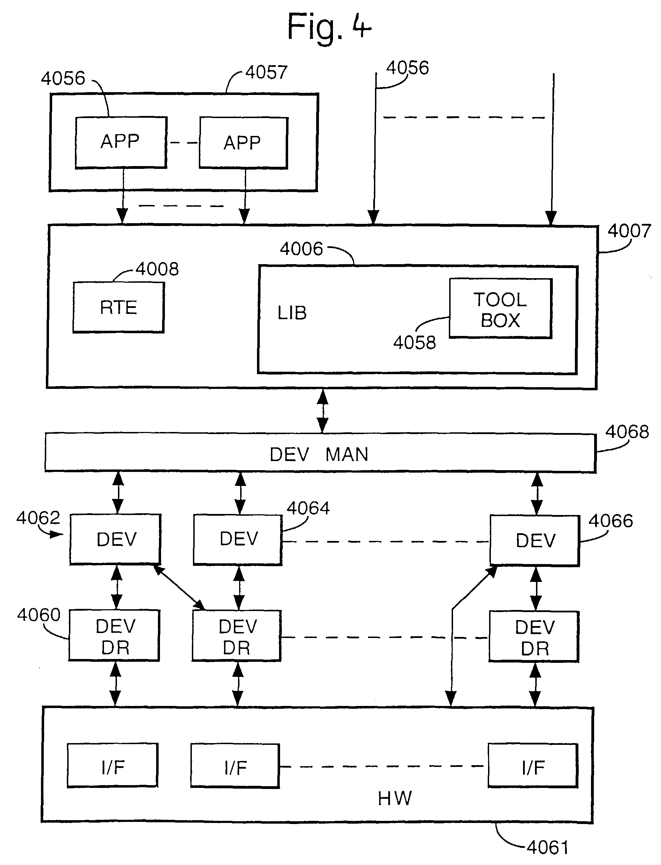

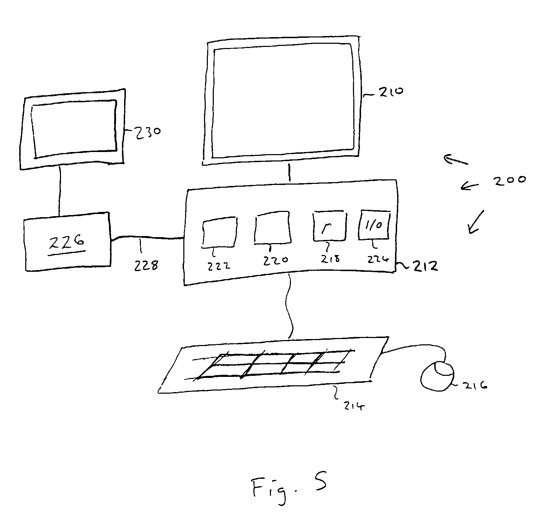

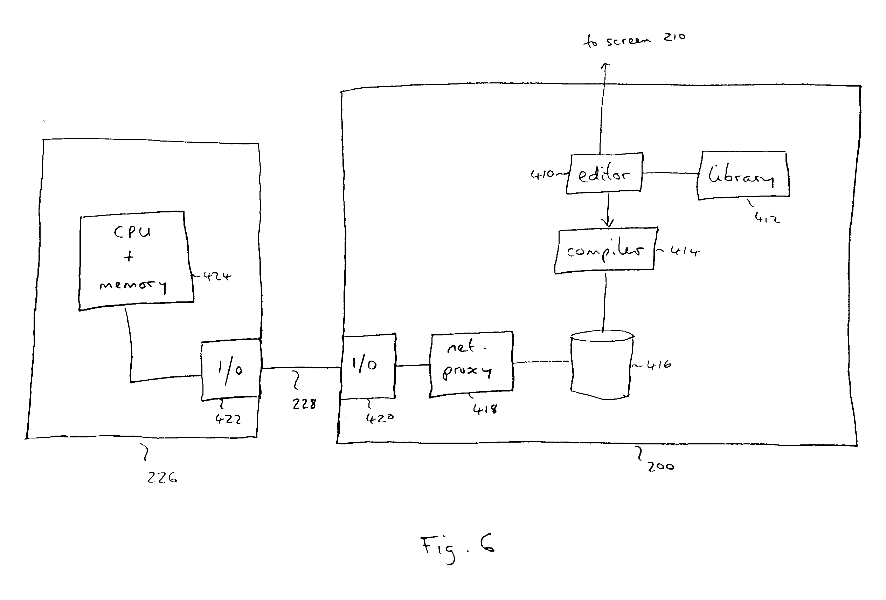

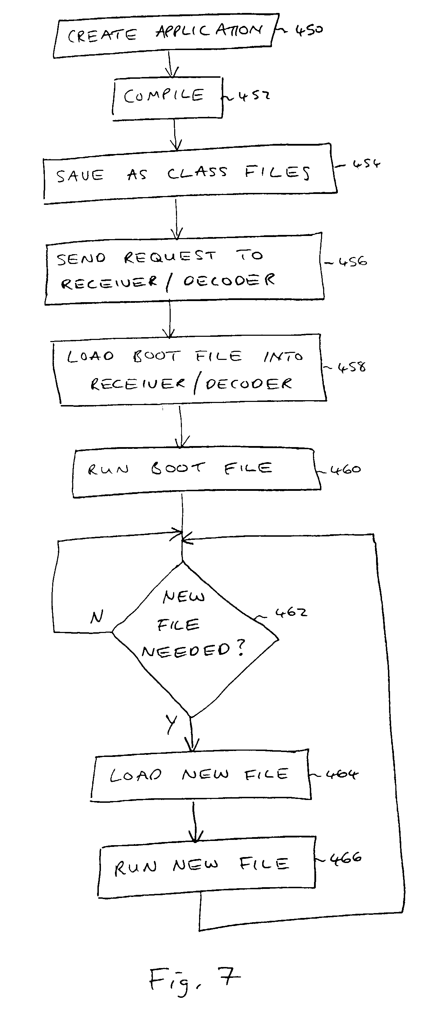

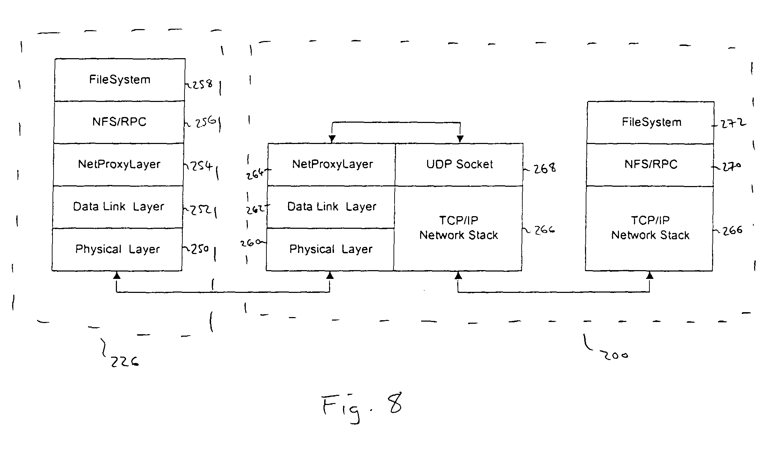

Referring to Figure 3, the elements of the receiver/decoder 13 or set-top box will now be described. The elements shown in this figure will be described in terms of functional blocks.

The receiver/decoder 13 comprises a central processor 20 including associated memory elements and adapted to receive input data from a serial interface 21, a parallel interface 22, a modem 23 (connected to the modem back channel 17 of Fig. 1), and switch contacts 24 on the front panel of the decoder.

The receiver/decoder is additionally adapted to receive inputs from an infra-red remote control 25 via a control unit 26 and also possesses two smartcard readers 27, 28 adapted to read bank or subscription smartcards 29, 30 respectively. The subscription smartcard reader 28 engages with an inserted subscription card 30 and with a conditional access unit 29 to supply the necessary control word to a demultiplexer/descrambler 30 to enable the encrypted broadcast signal to be descrambled. The decoder also includes a conventional tuner 31 and demodulator 32 to receive and demodulate the satellite transmission before being filtered and demultiplexed by the unit 30.

Processing of data within the receiver/decoder is generally handled by the central processor 20. Figure 4 illustrates the software architecture of the central processor 20 of the receiver/decoder. With reference to Figure 4, the software architecture comprises a Run-Time-Engine 4008, a Device Manager 4068 and a plurality of Devices 4062 and Device Drivers 4066 for running one or more applications 4056.

As used in this description, an application is preferably a piece of computer code for controlling high level functions of preferably the receiver/decoder 13. For example, when the end user positions the focus of remote control 25 on a button object seen on the screen of the television set 14 and presses a validation key, the instruction sequence associated with the button is run.

An interactive application proposes menus and executes commands at the request of the end user and provides data related to the purpose of the application. Applications may be either resident applications, that is, stored in the ROM (or FLASH or other non-volatile memory) of the receiver/decoder 13, or broadcast and downloaded into the RAM or FLASH memory of the receiver/decoder 13.

Applications are stored in memory locations in the receiver/decoder 13 and represented as resource files. The resource files comprise graphic object description unit files, variables block unit files, instruction sequence files, application files and data files, as described in more detail in the above-mentioned patent specifications.

The receiver/decoder contains memory divided into a RAM volume, a FLASH volume and a ROM volume, but this physical organization is distinct from the logical organization. The memory may further be divided into memory volumes associated with the various interfaces. From one point of view, the memory can be regarded as part of the hardware; from another point of view, the memory can be regarded as supporting or containing the whole of the system shown apart from the hardware.

The central processor 20 can be regarded as centred on a run time engine 4008 forming part of a virtual machine 4007. This is coupled to applications on one side (the "high level" side), and, on the other side (the "low level" side), via various intermediate logical units discussed below, to the receiver/decoder hardware 4061, comprising the various ports as discussed above (that is, for example, the serial interface 21, the parallel interface 22, modem 23, and control unit 26).

With specific reference to Figure 4, various applications 4057 are coupled to the virtual machine 4007; some of the more commonly used applications may be more or less permanently resident in the system, as indicated at 4057, while others will be downloaded into the system, eg from the MPEG data stream or from other ports as required.

The virtual machine 4007 includes, in addition to the run time engine 4008, some resident library functions 4006 which include a toolbox 4058. The library contains miscellaneous functions in C language used by the engine 4008. These include data manipulation such as compression, expansion or comparison of data structures, line drawing, etc. The library 4006 also includes information about firmware in the receiver/decoder 13, such as hardware and software version numbers and available RAM space, and a function used when downloading a new device 4062. Functions can be downloaded into the library, being stored in FLASH or RAM memory.

The run time engine 4008 is coupled to a device manager 4068 which is coupled to a set of devices 4062 which are coupled to device drivers 4060 which are in turn coupled to the ports or interfaces. In broad terms, a device driver can be regarded as defining a logical interface, so that two different device drivers may be coupled to a common physical port. A device will normally be coupled to more than one device driver; if a device is coupled to a single device driver, the device will normally be designed to incorporate the full functionality required for communication, so that the need for a separate device driver is obviated. Certain devices may communicate among themselves.

Each function of the receiver/decoder 13 is represented as a device 4062 in the software architecture of the receiver/decoder 13. Devices can be either local or remote. Local devices 4064 include smartcards, SCART connector signals, modems, serial and parallel interfaces, a MPEG video and audio player and an MPEG section and table extractor. Remote devices 4066, executed in a remote location, differ from local devices in that a port and procedure must be defined by the system authority or designer, rather than by a device and device driver provided and designed by the receiver/decoder manufacturer.

The run time engine 4008 runs under the control of a microprocessor and a common application programming interface. They are installed in every receiver/decoder 13 so that all receiver/decoders 13 are identical from the application point of view.

The engine 4008 runs applications 4056 on the receiver/decoder 13. It executes interactive applications 4056 and receives events from outside the receiver/decoder 13, displays graphics and text, calls devices for services and uses functions of the library 4006 connected to the engine 4008 for specific computation.

The run time engine 4008 is an executable code installed in each receiver/decoder 13, and includes an interpreter for interpreting and running applications. The engine 4008 is adaptable to any operating system, including a single task operating system (such as MS-DOS). The engine 4008 is based on process sequencer units (which take various events such as a key press, to carry out various actions), and contains its own scheduler to manage event queues from the different hardware interfaces. It also handles the display of graphics and text. A process sequencer unit comprises a set of action-groups. Each event causes the process sequencer unit to move from its current action-group to another action-group in dependence on the character of the event, and to execute the actions of the new action-group.

The engine 4008 comprises a code loader to load and download applications 4056 into the receiver/decoder memory. Only the necessary code is loaded into the RAM or FLASH memory, in order to ensure optimal use. The downloaded data is verified by an authentication mechanism to prevent any modification of an application 4056 or the execution of any unauthorized application. The engine 4008 further comprises a decompressor. As the application code (a form of intermediate code) is compressed for space saving and fast downloading from the MPEG stream or via a built-in receiver/decoder mode, the code must be decompressed before loading it into the RAM. The engine 4008 also comprises an interpreter to interpret the application code to update various variable values and determine status changes, and an error checker.

As mentioned above, authoring tool 4004 is provided to enable applications to be designed, created, tested and debugged. The authoring tool is run on a workstation (WS), such as a personal computer (PC) running Windows NT, Windows 95 or Window 98, or a UNIX machine, or a workstation running any other operating system. The authoring tool allows an application developer to design and create applications by editing them on the workstation screen.

According to a preferred embodiment, in order to test and debug applications, a receiver/decoder is provided which is linked to the workstation. The receiver/decoder is linked to the workstation in such a way that the various files which make up an application can be downloaded to the receiver/decoder as and when they are needed.

Referring to Figure 5, in overview the authoring tool comprises workstation 200 which is linked to receiver/decoder 226 by link 228. The workstation 200 comprises screen 210, computer 212, keyboard 214 and mouse 216. Computer 212 comprises a processor 218, memory 220, hard disk 222, input/output (I/O) ports 224, as well as other pieces of hardware and software that are conventional in such computers. Receiver/decoder 226 is connected to television 230, or other display.

The various components of the authoring tool 4004 are shown in more detail in Figure 6. The authoring tool comprises an editor 410 for creating and editing the various files that make up an application, library 412 which stores existing files for use by the editor 410, and compiler 414 for compiling files which have been produced by editor 410 into the intermediate language which can be understood by a virtual machine, such as virtual machine 4007 in Figure 4. The compiled files, which are called "class files" are saved in directory 416, which is a directory on the hard disk 222 of the workstation 200. Receiver/decoder 226 comprises CPU 424 and associated memory, input/output (I/O) port 422, as well as other components found in conventional receiver/decoders, such as those shown in Figure 3. Net proxy 418 (as described later) is provided in the workstation to allow the receiver/decoder 226 to access class files stored in directory 416 via receiver/decoder I/O port 422, serial link 228, and workstation I/O port 420.

An application developer creates new files, and/or makes use of existing files which are stored in the library 412, to produce files for his application using the editor 410. An application comprises source files, which contain instructions written in comprehensive language, such as Java, designed for a virtual machine, and, optionally, data files, which contain data which is to be used by the application. Files which are being edited are displayed on the workstation screen 210 and changes are entered using keyboard 214 and mouse 216. The files may be displayed in various ways; for example graphic files may be displayed as graphics on the screen, whereas for resource files, the code in the files may be displayed, or a representation of the overall structure or architecture of the code may be displayed.

An application may comprise one of more of the following types of resource files:
o source files - to define the entry points of the application
o panel files - to define the screens (these are graphical source files)
o class files - to define the data structures used by the application
o optionally, script files - to define the behaviour of the application

### Examples of data files are as follows:

o icon library files - these contain a collection of, for example, 4 bits per pixel bitmaps. These icons can be used by the panels as buttons or as decoration.
o images - these files contain a single bitmap of any size with four bits per pixel, giving 256 colours. This type of image is typically used as a background to a panel.
o colour tables - these are used to define the colours which a module can display on the screen.
o user data files - these files are defined by the user for use by the application. They are ASCII text files or binary data files.

Once an application has been created, it is converted into the intermediate language which can be understood by a virtual machine by compiler 414, and stored as class files in directory 416. The application may then be tested by running it on the processor 424 of receiver/decoder 226. In order to test an application, the workstation 200 sends a request to the receiver/decoder 226 in the form of a message containing the name of the port which is to be used for communication and the name of the directory in which the class files are stored.

In contrast to a conventional receiver/decoder, the receiver/decoder 226 of the present embodiment is programmed such that, when it is first turned on, it runs a resident program called network file server (NFS) loader. This program waits for a request to be received from the workstation 200. When the program receives a request, it accesses the directory specified in the request, using the specified port. The directory 416 contains a file called startup txt which contains the name of the boot file, that is, the file which initiates the application. The NFS loader reads the name of the boot file and then downloads that file from the workstation directory and stores it in memory in the receiver/decoder. The boot file is then run by the processor 424 in the receiver/decoder.

The boot file may contain calls to routines which are contained in other files, in which case the required file needs to be loaded into the processor. In this case, the processor first looks in the receiver/decoder memory to see if the file that it needs is stored locally, for example, because it has already been used. If the file is not stored locally, then the processor looks in the workstation directory, specified in the request from the workstation, to find the file. The file is then downloaded and stored in the receiver/decoder memory (for example RAM or FLASH memory) for use by the receiver/decoder. In this way, applications which have been created by the editor 410 and stored in directory 416, are run on the receiver/decoder 226. The output from receiver/decoder 226 is displayed on television set 230. This allows the application developer to see how the application looks when run on a receiver/decoder and television.

Referring to Figure 7, the various steps in creating and testing an application will be described. In step 450 an application is created using the editor 410. In step 452 the application is compiled, and in step 454 the compiled application is saved in directory 416 as class files. In step 456 a request is sent from the workstation to the receiver/decoder, specifying the name of the directory and the port to be used for communication. In step 458 the boot file is loaded from the directory into the receiver/decoder and in step 460 the boot file is run on the processor of the receiver/decoder. In step 462, it is decided by the processor whether or not a new class file is required. If a new class file is required, then in step 464 that new class file is loaded into the receiver/decoder and in step 466 the new class file is run. Further class files are loaded into the receiver/decoder and run by the processor as required.

The editor 410 may be used to make changes to the application, for example as a result of the testing. As a result of such changes, some or all of the files stored in the directory 416 may be updated. The updated files may then be transferred to the receiver/decoder 226 in one of several ways, as will now be described.

In one embodiment, no special provision is made for updating files in the receiver/decoder 226. When the receiver/decoder is turned on, it simply downloads the files that it requires from the directory 416. In this case, if changes have been made to files that have already been downloaded into the receiver/decoder, then the receiver/decoder must be restarted, so that the updated files will be downloaded. This may be done, for example, by switching the receiver/decoder off and then on again. The receiver/decoder then downloads all files, including any modified files, that are needed to run the application.

In another embodiment, files in the receiver/decoder are updated by sending an "unload file" command from the workstation to the receiver/decoder. When the receiver/decoder receives this command, it deletes the specified files. The next time that that file is required, it will not be present locally in the receiver/decoder, and so the updated version of the file will be downloaded from the directory 416.

In a further embodiment, the receiver/decoder checks the time and date of last modification of all files that are available to it both locally and in the workstation, and uses the latest version of all files. In this way, modified files are transferred automatically to the receiver/decoder.

Figure 8 illustrates the architecture of the various layers that are used to give the receiver/decoder 226 access to the workstation's hard disk, containing the directory 416. The receiver/decoder is provided with a client network file system (NFS) which permits the receiver/decoder to use the workstation's hard disk as if it were a local storage device. In the present example, the receiver/decoder does not have a network stack, and so a proxy stack ("NetProxy") 418 is provided on the workstation for use by the receiver/decoder. This proxy establishes a link between the workstation's network stack and the physical port which is connected to the receiver/decoder.

Referring to Figure 8, a physical layer 250 in the receiver/decoder provides the physical port between the receiver/decoder 226 and the workstation 200. Data link layer 252 ensures the integrity of the frames which are exchanged with the NetProxy, and demultiplexes frames arriving from different destinations. NetProxy layer 254 is a software layer which compensates for the absence of a network stack in the decoder. The NetProxy layer communicates with a NetProxy layer 264 in the workstation, via physical layer 260 and data link layer 264 in the workstation. All messages received by the NetProxy layer 264 in the workstation are passed to network stack 266 via UDP socket 268; similarly all messages received by the UDP socket 268 are transferred to receiver/decoder 226. NFS/RPC layer 256 in the receiver/decoder provides the interface between the file system 258 of the receiver/decoder and the NetProxy layer, while NFS/RPC layer 270 in the workstation provides the interface between the workstation's file system and the network stack.

In an alternative embodiment, the receiver/decoder is provided with a network stack, and the NetProxy layers described above are dispensed with.

A workstation and receiver/decoder have been described above with reference to an authoring tool; however the receiver/decoder and workstation may also be used for other purposes, such as for demonstrating applications.

It will be understood that the present invention has been described above purely by way of example, and modifications of detail can be made within the scope of the invention.

Each feature disclosed in the description, and (where appropriate) the claims and drawings may be provided independently or in any appropriate combination.

Reference numerals appearing in the claims are by way of illustration only and shall have no limiting effect on the scope of the claims.

## Claims

1. A receiver/decoder comprising means for running an application, the application comprising a plurality of files, and means for selectively reading at least one of the files from an external storage means.

2. A receiver/decoder according to claim 1 wherein the receiver/decoder is adapted to read an individual file from the external storage means.

3. A receiver/decoder according to claim 1 or 2 wherein the receiver/decoder is adapted to read said at least one file as it is required to run the application.

4. A receiver/decoder according to any of the preceding claims wherein the receiver/decoder is adapted to read updated files.

5. A receiver/decoder according to any of the preceding claims wherein the external storage means is part of a workstation.

6. A receiver/decoder according to claim 5 wherein the receiver/decoder is adapted to use as its network stack a simulated network stack on the workstation.

7. A receiver/decoder according to any of the preceding claims wherein the receiver/decoder is adapted to load a boot file from the external storage means.

8. A workstation comprising storage means for storing an application, the application comprising a plurality of files, and means for allowing access to at least some of the files by a receiver/decoder.

9. A workstation according to claim 8 wherein the means for allowing access to said at least one file is adapted to allow an individual file to be read.

10. A workstation according to claim 8 or 9 further comprising means for editing the application.

11. An application development tool comprising a workstation for editing an application and a receiver/decoder for running the application, wherein the receiver/decoder has means for selectively reading at least a part of the application from the workstation and the workstation has means for communicating the or each part to the receiver/decoder.

12. An application development tool according to claim 11, the workstation further comprising storage means for storing the application.

13. An application development tool according to claim 11 or 12 wherein the application comprises a plurality of files.

14. An application development tool according to claim 13 wherein the receiver/decoder is adapted to read an individual file from the storage means.

15. An application development tool according to claim 13 or 14 wherein the receiver/decoder is adapted to read a file as it is required to run the application.

16. An application development tool according to claim any of claims 13 to 15 wherein the editing tool is adapted to update a file and the receiver/decoder is adapted to read said files once updated.

17. An application development tool according to any of claims 13 to 16 wherein the receiver/decoder is adapted to read the most recent version of a file.

18. An application development tool according to any of claims 13 to 17 wherein the workstation is adapted to instruct the receiver/decoder to discard a file.

19. A method of transferring an application from a workstation to a receiver/decoder, the application comprising a plurality of files, comprising transferring an individual file from the workstation to the receiver/decoder.

20. A method according to claim 15 wherein a file is transferred when it is required to run the application.

21. A method according to claim 19 or 20 further comprising updating a file and transferring the updated file to the receiver/decoder.

22. A method of running an application on a receiver/decoder, the application comprising a plurality of files, comprising transferring a file to the receiver/decoder as it is required to run the application.

23. A method of running an application on a receiver/decoder, the application comprising a boot file and at least one further file, comprising:
transferring a boot file to the receiver/decoder;
executing the boot file in the receiver/decoder; and
transferring the at least one further file when it is required.

24. A computer readable medium having stored thereon a program for carrying out the method of any of claims 19 to 23.

25. A computer program product comprising a program for carrying out the method of any of claims 19 to 23.
